# DEMANDE DE BREVET EUROPEEN

(11) **EP 3 343 302 A1**
(43) Date de publication de la demande: **04.07.2018**
(21) Numéro de dépôt: 17210297.2
(22) Date de dépôt: 22.12.2017
(51) Int. Cl.: G05B 19/042

(54) **BOITIER D' ACQUISITION DE DONNÉES MACHINE**

(30) Priorité: 28.12.2016 FR 1663487
(71) Demandeur: Glial Technology, 21700 Nuits-Saint-Briand (FR)
(72) Inventeur: COLLOT, Patrick, 21250 CORBERON (FR)
(74) Mandataire: Gevers SA

(57) **Abrégé**

La présente invention concerne un système de suivi de production assisté par ordinateur d'un(e) ou plusieurs ateliers ou lignes de production comprenant respectivement une ou plusieurs machines sur la ou lesquelles sont positionnés au moins un boitier d'acquisition comprenant une carte électronique de connectique (4) connectée aux différentes interfaces de la ou des machines, telles que les entrées logiques et/ou les entrées analogiques et/ou le BUS et/ou le LAN de chaque machine et une carte électronique de traitement (2) des données connectée à ladite carte électronique de connectique (4) ; ledit système est remarquable en ce qu'il comprend un programme d'ordinateur apte à horodater et classer les données transmises par les différentes interfaces connectées à la carte électronique de traitement (2), dans différentes arborescences de plans de classement dits PDC, à classer les données d'un plan de classement PDC vers un second plan de classement PDC et de déterminer une ou plusieurs actions en fonction des données de chaque plan de classement PDC, et à générer des fichiers informatiques, au format d'un tableur, d'une page web au format html, ou similaire, comprenant les données relatives aux différents plans de classement PDC et/ou relatives aux actions, aptes à être exportés, par l'intermédiaire d'une liaison sans fil (Wifi), ou filaire (ethernet), et consultés sur un appareil informatique de type PC, PC portable, tablette, smartphone ou similaire.

## Description

La présente invention se rapporte à un boitier d'acquisition de données machine permettant de réaliser un suivi de production assisté par ordinateur dit SPAO notamment.

Il est bien connu qu'un grand nombre de machines de production, plus particulièrement les plus anciennes, ne possède pas de moyens de transmission des informations d'état de production à un système de contrôle de la production ou à un système de surveillance de la production. On entend par machine un équipement industriel de production qui peut être piloté par un équipement électronique traditionnel tel qu'un automate programmable ou une commande numérique dit CNC selon l'acronyme anglo-saxon « Computer Numerical Control ». Les informations d'état de la production ne peuvent donc souvent être enregistrées que par des entrées d'un opérateur par l'intermédiaire d'un terminal dédié ou par l'intermédiaire d'un clavier par exemple.

Toutefois, les entrées manuelles de l'opérateur ne fournissent que des informations limitées et peu précises sur l'état de production de la machine de production.

Afin de remédier à ces inconvénients, il est bien connu des systèmes constitués d'un boîtier connecté à une ou plusieurs machines tels que ceux décrits dans les documents US 2003/0033042 et WO 2004/053607.

Le document US 2003/0033042 décrit un boitier connecté aux sorties de signal de la machine de production et génère des informations d'état de production de la machine de production à partir des données des sorties de signal des événements de la machine de fabrication et/ou des entrées manuelles d'un opérateur, lesdites entrées manuelles consistant en des informations qui sont générées par un opérateur à partir d'un clavier de saisie ou d'un terminal.

Le document WO 2004/053607 décrit un système de suivi de production constitué d'un système temps réel primaire comprenant plusieures entrées respectivement connectées à une machine et au moins une sortie connecté à un serveur. Le système temps réel primaire comprend un programme apte à déterminer le temps de cycle de chaque machine à partir de l'information de comptage de la machine puis à déterminer le mode de fonctionnement de la machine. Les informations sont ensuite transmises au serveur qui met sous forme de pages web lesdites informations pour les mettre à disposition d'ordinateurs clients qui sont connectés au serveur par un réseau intranet ou ethernet.

Toutefois, tous ces systèmes ne sont pas autonomes, de sorte qu'ils sont difficilement adaptables sur des lignes de production anciennes comportant des machines ne possédant pas de moyens de transmission des informations d'état de production, et ne permettent pas de calculer de manière autonome les indicateurs de performance et de maintenance de la machine, tels que le temps moyen entre pannes dit MTBF selon l'acronyme anglo-saxon « Mean Time Between Failures », le temps moyen avant panne dit MTTF selon l'acronyme anglo-saxon « Mean Time To Failure », le taux de disponibilité correspondant au ratio entre le MTTF et le MTBF, etc.

On connait également le document FR 2 848 313 qui décrit un système de suivi de production assisté par ordinateur. Ledit système est constitué d'un système temps réel primaire comprenant une entrée connectée à une machine et/ou à un système temps réel secondaire d'une machine et une sortie connectée à un serveur, lesdits systèmes temps réel primaire et/ou secondaire comprenant un programme apte à déterminer le mode de fonctionnement de la machine et/ou le temps de fonctionnement dans chacun de ces modes et ledit serveur mettant ces informations à la disposition d'ordinateurs distants. Une date et une heure sont attribuées à chaque information dynamique reçue relative au processus de production, et cette information est ensuite enregistrée dans un fichier d'horodatage afin que le serveur puisse fournir des informations horodatées aux ordinateurs clients.

Ce type de système ne permet pas non plus de calculer de manière autonome les indicateurs de performance et de maintenance de la machine, tels que le temps moyen entre pannes dit MTBF, le temps moyen avant panne dit MTTF, le taux de disponibilité correspondant au ratio entre le MTTF et le MTBF, etc. De plus, il ne permet pas la transmission d'ordres à la machine à laquelle il est connecté.

L'un des buts de l'invention est de remédier à ces inconvénients en proposant un boitier d'acquisition de données machine de conception simple et facile à mettre en oeuvre, apte à se connecter à tout type de machine de production sur une ligne de production, permettant un calcul autonome des indicateurs de performance de la machine, ainsi que la transmission desdits indicateurs à des appareils informatiques, et la signalisation d'informations visuelles et sonores.

A cet effet, et conformément à l'invention, il est proposé un système de suivi de production assisté par ordinateur d'un(e) ou plusieurs ateliers ou lignes de production comprenant respectivement une ou plusieurs machines sur la ou lesquelles sont positionnés au moins un boitier d'acquisition comprenant une carte électronique de connectique connectée aux différentes interfaces de la ou des machines, telles que les entrées logiques et/ou les entrées analogiques et/ou le BUS et/ou le LAN de chaque machine et une carte électronique de traitement des données connectée à ladite carte électronique de connectique ; ledit système est remarquable en ce qu'il comprend un programme d'ordinateur apte à horodater et classer les données transmises par les différentes interfaces connectées à la carte électronique de traitement, dans différentes arborescences de plans de classement dits PDC, à classer les données d'un plan de classement PDC vers un second plan de classement PDC et de déterminer une ou plusieurs actions en fonction des données de chaque plan de classement PDC, et à générer des fichiers informatiques, au format d'un tableur, d'une page web au format html, ou similaire, comprenant les données relatives aux différents plans de classement PDC et/ou relatives aux actions, aptes à être exportés, par l'intermédiaire d'une liaison sans fil (Wifi), ou filaire (ethernet), et consultés sur un appareil informatique de type PC, PC portable, tablette, smartphone ou similaire.

Par ailleurs, ledit programme d'ordinateur comprend des moyens pour classer les données transmises par les différentes interfaces connectées à la carte électronique de traitement dans un premier plan de classement PDC1 comprenant les données relatives aux états de la machine, aux avertissement et aux captures.

Ledit programme d'ordinateur comprend des moyens pour classer les données transmises par les différentes interfaces connectées à la carte électronique de traitement dans un second plan de classement PDC2 comprenant les données relatives aux mesures physiques.

Ledit programme d'ordinateur comprend des moyens pour classer les données transmises par les différentes interfaces connectées à la carte électronique de traitement dans un troisième plan de classement PDC3 comprenant les données relatives aux compteurs d'occurrences et/ou de durées, qu'ils soient absolus, relatifs ou périodiques.

Ledit programme d'ordinateur comprend des moyens pour classer les données transmises par les différentes interfaces connectées à la carte électronique de traitement dans un quatrième plan de classement comprenant les données relatives aux alarmes.

Par ailleurs, certaines données du plan de classement PDC1 comprenant les données relatives aux états de la machine, aux avertissement et aux captures sont ensuite traitées par le programme d'ordinateur en identifiant dans un premier temps la source des données, puis en faisant passer un test auxdites données et éventuellement une étape de traitement consistant à appliquer une fonction de conversion de l'entrée analogique de type Ax+B ou similaire afin de classer lesdites données dans le plan de classement PDC3 en tant que compteur occurrence, que ce soit en absolu (unité), en relatif (unité, valeur, repli) ou en périodique (unité, période), ou en tant que compteur durée, que ce soit en absolu, en relatif, en périodique (période en sec) ou en activité (repli à 0 en FE en sec).

De plus, certaines données du plan de classement PDC2 comprenant les données relatives aux mesures et du plan de classement PDC3 comprenant les données relatives aux compteurs d'occurrences et/ou de durées sont ensuite traitées par le programme d'ordinateur en identifiant dans un premier temps la source des données, puis en faisant passer un test auxdites données afin de classer lesdites données dans le plan de classement PDC4 en tant qu'alarmes.

Ledit programme d'ordinateur comprend des moyens pour déterminer des actions pour les balises lumineuses, sonores ou similaires (15) du boitier et/ou les sorties logiques et/ou la sortie analogique et/ou le BUS et/ou le LAN, en fonction des données des plans de classement PDC1, PDC2, PDC4, PDC5 et PDC6, lesdites actions étant déterminées à partir de la détermination de la source des données des plans de classement PDC1, PDC2, PDC4, PDC5 et PDC6 et d'au moins un test, tel qu'un test sur la valeur, l'identité ou le message ou similaire.

Un autre objet de l'invention concerne un boitier d'acquisition de données machine pour le suivi de production assisté par ordinateur d'un ou plusieurs ateliers ou lignes de production comprenant respectivement une ou plusieurs machines; ledit boitier est remarquable en ce qu'il est constitué d'un capot dit principal ouvert à chacune de ses extrémités et apte à recevoir une carte électronique de traitement, un capot inférieur dit socle apte à recevoir une carte électronique de connectique et à coopérer avec l'extrémité inférieure du capot principal et comprenant des moyens de solidarisation d'un tube coudé, une embase de fixation apte à être fixée sur une machine et comprenant des moyens de solidarisation du tube coudé, ladite carte électronique de traitement étant apte à être connectée à la carte électronique de connectique, et un capot supérieur coiffant l'extrémité supérieure du capot principal.

De préférence, le capot inférieur est constitué d'une pièce de révolution comportant à une première extrémité une jupe périphérique comportant des moyens de solidarisation coopérant avec le bord de l'extrémité inférieure du capot principal et à l'extrémité opposé une section tubulaire cylindrique recevant le tube coudé.

Par ailleurs, ladite embase de fixation est constituée d'une platine de fixation, sensiblement rectangulaire ou oblongue, comprenant quatre trous traversant pour permettre la fixation de ladite platine sur une paroi verticale ou horizontale d'une machine, au moyen de vis, écrous ou de rivets ou similaires et, dans la partie centrale de ladite platine, une portion cylindrique apte à recevoir le tube coudé.

De manière avantageuse, ledit boitier comporte une ou plusieurs balises lumineuses ou sonore ou similaires amovibles.

Chaque balise lumineuse ou sonore ou similaires présente une forme sensiblement cylindrique.

Par ailleurs, l'extrémité inférieure de chaque balise lumineuse ou sonore comporte une jupe circulaire apte à coiffer l'extrémité supérieure du capot principal ou l'extrémité supérieure d'une autre balise lumineuse ou sonore et l'extrémité supérieure de chaque balise lumineuse est apte à être fermée par le capot supérieur.

De plus, chaque balise lumineuse comporte au moins une LED montée sur un circuit électrique apte à être connecté à la carte électronique de traitement positionnée dans le capot principal et, éventuellement, au circuit électrique d'une autre balise lumineuse ou sonore ou autre coiffant la précédente.

Par ailleurs, ladite carte électronique de traitement comprend au moins un processeur, une interface électrique, une mémoire flash, une mémoire RAM, une horloge interne, un circuit d'alimentation 24V, un circuit d'alimentation 5V pour permettre une alimentation de la carte électronique par une batterie, un circuit intégré pour la gestion de l'alimentation, un contrôleur Ethernet pour permettre de connecter le boitier sur un réseau informatique, un contrôleur wifi afin de permettre de connecter le boitier sur un réseau informatique sans fil, et des moyens d'alimentation des balises lumineuses ou sonores ou similaires.

Ledit processeur comporte un programme informatique permettant de recevoir les signaux numériques et/ou analogiques transmis par la machine à laquelle le boitier suivant l'invention est connecté, puis d'horodater lesdits signaux et de les enregistrer dans la mémoire du boitier, de calculer des indicateurs de performance et de maintenance tels que le taux de disponibilité, le MTBF, le MTTF, etc. et de générer des fichiers informatiques, au format d'un tableur, d'une page web au format html, ou similaire, qui peuvent être exportés, par l'intermédiaire d'une liaison sans fil (Wifi), ou filaire (ethernet), et consultés sur un appareil informatique de type PC, PC portable, tablette, smartphone.

D'autres caractéristiques, détails et avantages de l'invention ressortiront de la description donnée ci-après, à titre d'exemple non limitatif, du système de suivi de production assisté par ordinateur et du boitier d'acquisition suivant l'invention, en référence aux dessins annexés dans lesquels :
- la figure 1 est une vue en perspective du boitier d'acquisition machine suivant l'invention,
- la figure 2 est une vue en perspective éclatée du boitier d'acquisition machine suivant l'invention
- la figure 3 est une vue en coupe sagittale du boitier d'acquisition de données machine suivant l'invention,
- la figure 4 est une vue en perspective avant de la carte électronique de connectique d'alimentation électrique et des entrées et des sorties des données analogiques et/ou numériques du boitier d'acquisition suivant l'invention,
- la figure 5 est une vue en perspective arrière de la carte électronique de connectique d'alimentation électrique et des entrées et des sorties des données analogiques et/ou numériques du boitier d'acquisition suivant l'invention, représentée sur la figure 4,
- la figure 6 est une vue en perspective de la carte électronique de traitement des données analogiques et/ou numériques du boitier d'acquisition suivant l'invention,
- la figure 7 est une représentation schématique de l'architecture de la carte électronique de traitement des données analogiques et/ou numériques du boitier d'acquisition suivant l'invention,
- la figure 8 est une représentation synoptique du fonctionnement du programme d'ordinateur de la carte électronique de traitement,
- la figure 9 est une représentation synoptique du fonctionnement du programme d'ordinateur de la carte électronique de traitement,

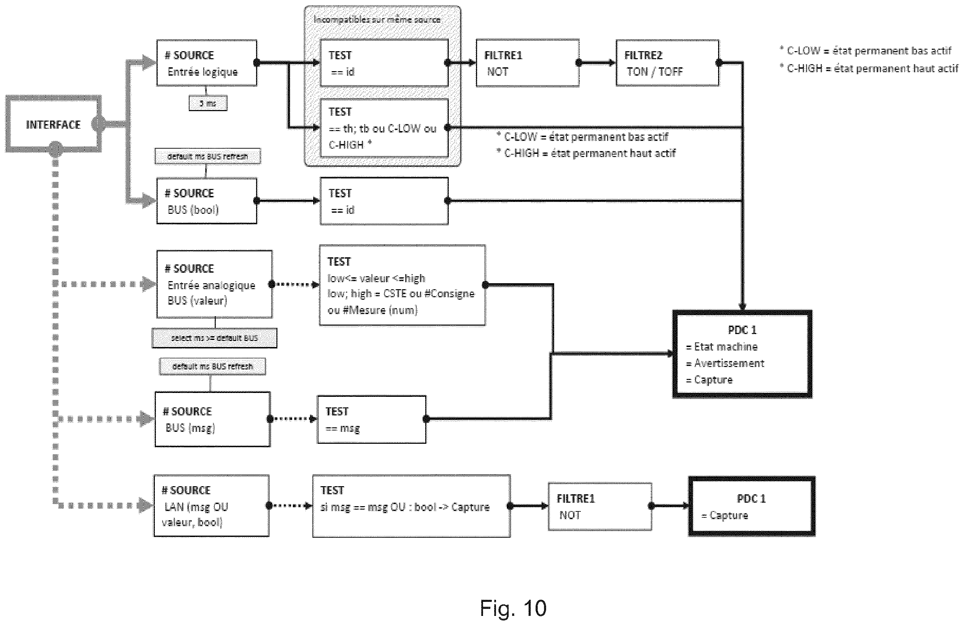

- la figure 10 est une représentation synoptique du classement des données dans un premier plan de classement PDC,
- la figure 11 est une représentation synoptique du classement des données dans un second plan de classement PDC,
- la figure 12 est une représentation synoptique du classement des données dans un troisième plan de classement PDC,
- la figure 13 est une représentation synoptique du classement des données dans un quatrième plan de classement PDC,
- la figure 14 est une représentation synoptique de la génération des actions en fonction des données des différents plans de classement PDC.

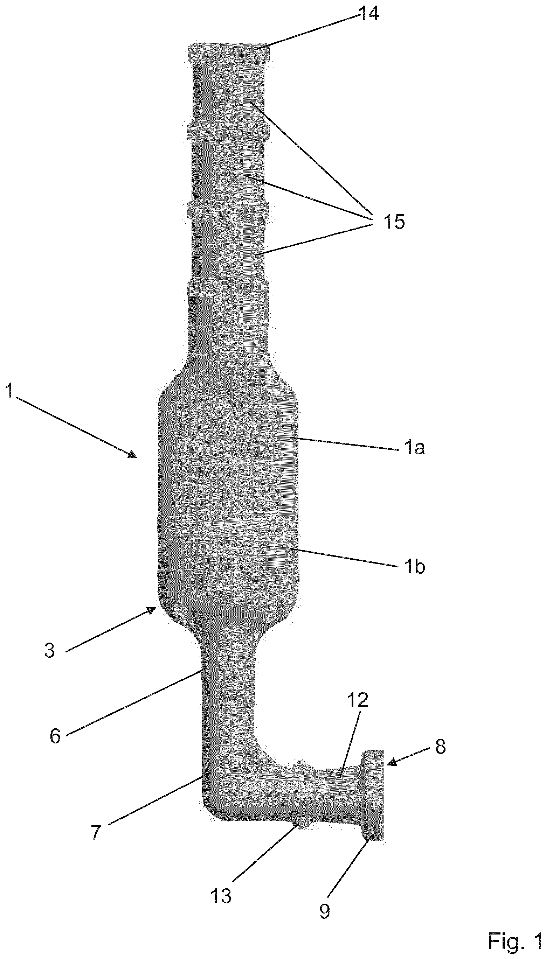

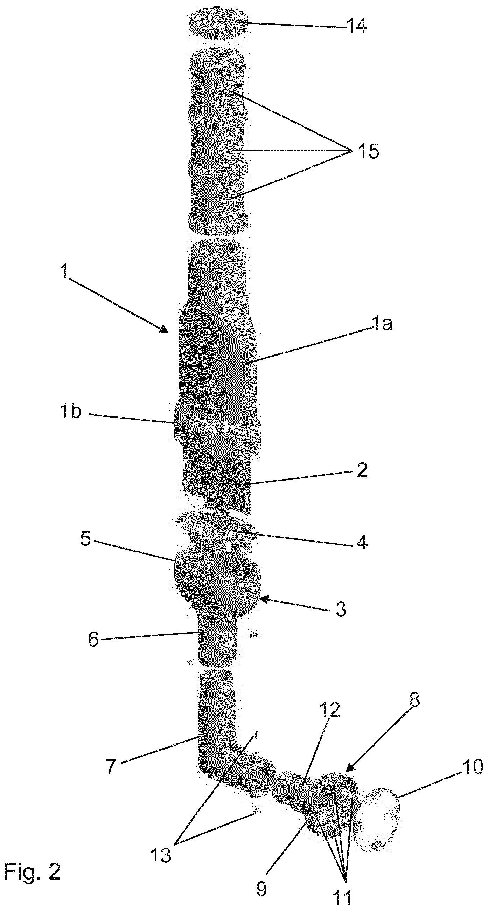

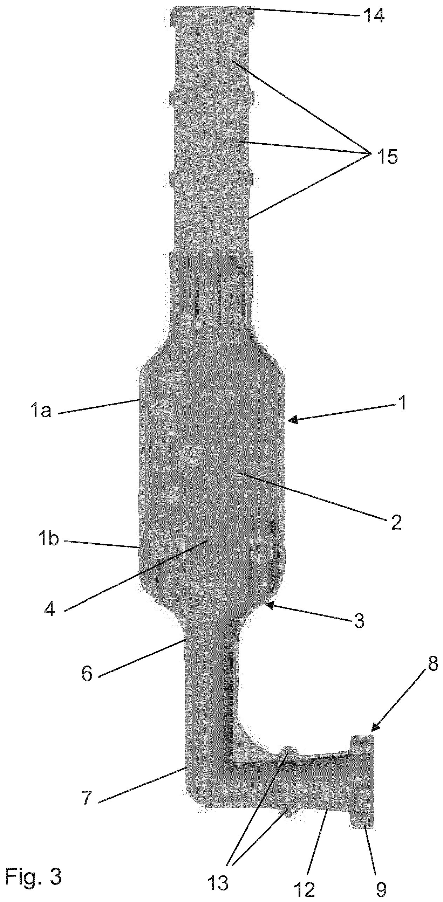

En référence aux figures 1 à 3, le boitier d'acquisition de données machine suivant l'invention est constitué d'un capot dit principal 1 ouvert à chacune de ses extrémités et apte à recevoir une carte électronique de traitement 2 qui sera détaillée un peu plus loin. Dans cet exemple particulier de réalisation ledit capot principal comporte une partie inférieure 1a de section droite oblongue et une partie supérieure 1b de section droite oblongue aplatie.

Il est bien évident que le capot principal 1 pourra présenter une forme quelconque, telle qu'une forme cylindrique par exemple, sans pour autant sortir du cadre de l'invention.

Ledit boîtier comprend également un capot inférieur 3 dit socle apte à recevoir une carte électronique de connectique 4 et à coopérer avec l'extrémité inférieure du capot principal 1. Dans cet exemple particulier de réalisation, le capot inférieur 3 est constitué d'une pièce de révolution comportant à une première extrémité une jupe périphérique 5 comportant des moyens de solidarisation coopérant avec le bord de l'extrémité inférieure du capot principal 1 et à l'extrémité opposé une section tubulaire cylindrique 6 recevant un tube coudé 7

Par ailleurs, le boitier suivant l'invention comporte également une embase de fixation 8 constituée d'une platine de fixation 9, sensiblement oblongue, comprenant un joint 10 et quatre trous traversant 11 pour permettre la fixation de ladite platine 8 sur une paroi verticale ou horizontale d'une machine, non représentée sur les figures, au moyen de vis, écrous ou de rivets par exemple et, dans la partie centrale de ladite platine 8, une portion cylindrique 12 apte à s'emboiter dans le tube coudé 7 ou dans l'extrémité inférieure du capot inférieur 3. On notera que le tube coudé 7 est solidarisé à l'embase de fixation 8, au niveau de la portion cylindrique 12, et/ou au capot inférieur 3 au moyen de vis pointeau 13.

De plus, le boitier suivant l'invention comporte un capot supérieur 14 apte à coiffer l'extrémité supérieure du capot principal 1.

De manière avantageuse, le boitier suivant l'invention comporte également des balises lumineuses 15, de différentes couleurs, vert, orange et rouge par exemple, ou sonore, ou similaire, chaque balise lumineuse ou sonore 15 présentant une forme sensiblement cylindrique. L'extrémité inférieure de chaque balise lumineuse ou sonore 15 comporte une jupe circulaire apte à coiffer l'extrémité supérieure du capot principal 1 ou l'extrémité supérieure d'une autre balise lumineuse 15 et l'extrémité supérieure de chaque balise lumineuse 15 est apte à être fermée par le capot supérieur 14. Par ailleurs, chaque balise lumineuse 15 comporte au moins une LED montée sur un circuit électrique apte à être connecté à la carte électronique de traitement 2 positionnée dans le capot principal 1 et, éventuellement, au circuit électrique d'une autre balise lumineuse ou sonore 15 coiffant la première. La connexion du circuit électrique de chaque balise lumineuse 15 avec la carte électronique de traitement positionnée dans le capot principal 1 et/ou au circuit électrique d'une autre balise lumineuse ou sonore 15 se fera au moyen de toute connectique appropriée bien connue de l'homme du métier.

Ainsi, le boitier d'acquisition pourra présenter plusieurs configurations. Dans une première configuration du boitier suivant l'invention, non représentée sur les figures, permettant la fixation du boitier sur une paroi verticale d'une machine, ledit boîtier d'acquisition comprend un boitier principal 1 dont l'extrémité supérieure est fermée par un capot supérieur 14 et dont l'extrémité inférieure est fermée par un capot inférieur 3. Ce dernier reçoit l'une des extrémités d'un tube coudé 7, l'autre extrémité du tube coudé 7 étant solidaire de la portion cylindrique 12 d'une embase de fixation 8. On notera que dans cette configuration, le boitier suivant l'invention ne comporte ni de balises lumineuses permettant l'émission d'un signal visuel ni de balises sonores permettant l'émission d'un signal auditif.

Dans une seconde configuration du boitier suivant l'invention, non représentée sur les figures, permettant la fixation du boitier sur une paroi horizontale d'une machine, ledit boitier comprend un boitier principal 1 dont l'extrémité supérieure est fermée par un capot supérieur 14 et dont l'extrémité inférieure est fermée par un capot inférieur 3. Ce dernier reçoit la portion cylindrique 12 d'une embase de fixation 8.

Dans une troisième configuration du boitier suivant l'invention permettant la fixation du boitier sur une paroi verticale d'une machine, non représentée sur les figures, ledit boitier comprend un boitier principal 1 dont l'extrémité supérieure est fermée par un empilement de trois balises lumineuses 15, verte, orange et rouge par exemple, l'extrémité supérieure de la dernière balise lumineuse 15 étant fermée par un capot supérieur 14, et dont l'extrémité inférieure est fermée par un capot inférieur 3. Ce dernier reçoit l'une des extrémités d'un tube coudé 7, l'autre extrémité du tube coudé 7 étant solidaire de la portion cylindrique 12 d'une embase de fixation 8.

Dans une dernière configuration du boitier suivant l'invention permettant la fixation du boitier sur une paroi horizontale d'une machine, non représentée sur les figures, ledit boitier d'acquisition comprend un boitier principal 1 dont l'extrémité supérieure est fermée par un empilement de trois balises lumineuses 15, vert, orange et rouge par exemple, l'extrémité supérieure de la dernière balise lumineuse 15 étant fermée par un capot supérieur 14, et dont l'extrémité inférieure est fermée par un capot inférieur 3. Ce dernier reçoit la portion cylindrique 12 d'une embase de fixation 8.

On comprend bien que la balise suivant l'invention est modulable, en fonction des besoins, notamment de signalisation lumineuse, sonore ou de tout autre type (ex synthèse vocale), et adaptable à tout type de machine ancienne ou récente.

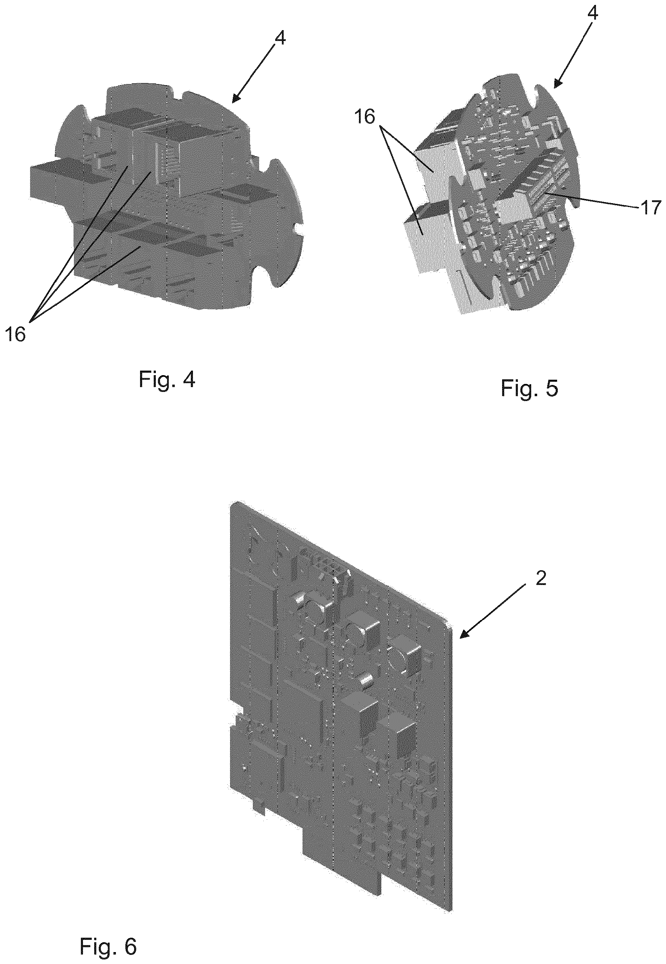

Par ailleurs, en référence aux figures 4 et 5, le boitier d'acquisition suivant l'invention comporte une carte électronique de connectique 4 de forme oblongue, apte à être positionnée à l'extrémité inférieure du capot principal 1 et/ou dans le capot inférieur 3, et comportant sur l'une de ses faces des connectiques de type RJ 45 16 formant des entrées et/ou sorties logiques et analogiques permettant de mesurer un état ou une valeur venant de la machine et/ou de fournir une tension ou un courant vers la machine, et sur sa face opposée un connecteur d'extension dit slot 17 apte à recevoir la carte électronique de traitement 2 représentée sur la figure 6. Ladite carte électronique de connectique 4 comporte avantageusement un circuit de protection en surtension, un circuit d'inversion de polarité, un circuit de protection en courant, un circuit de filtrage CEM permettant de filtrer les perturbations venant de l'extérieur et les perturbations produites par les alimentations de la carte électronique de traitement.

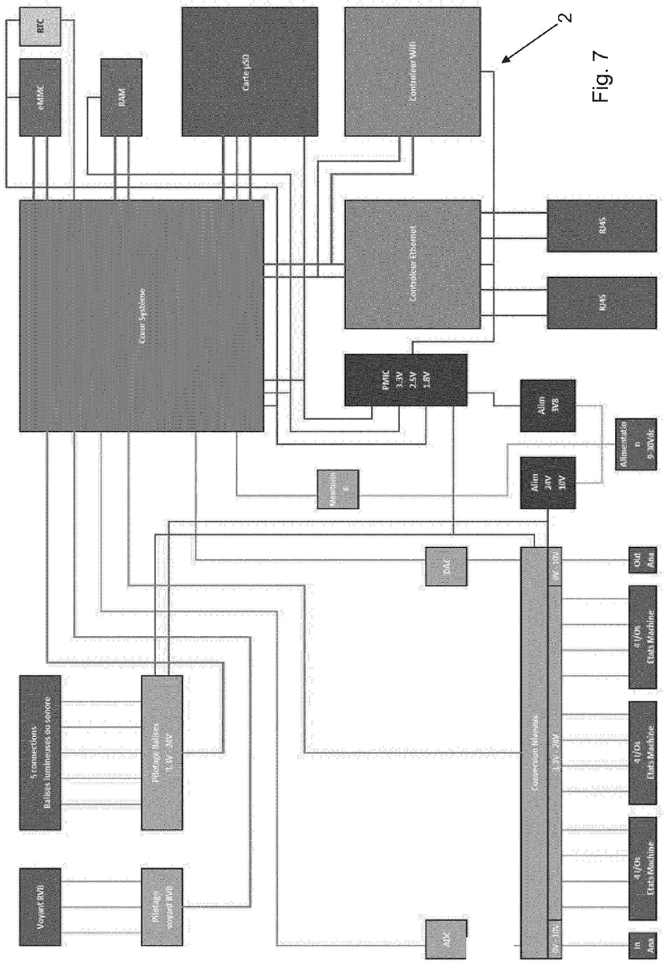

Ladite carte électronique de traitement 2, en référence aux figures 6 et 7, comprend un processeur, une interface électrique, une mémoire flash, une mémoire RAM, une horloge interne, un circuit d'alimentation 24V, un circuit d'alimentation 5V pour permettre une alimentation de la carte électronique par une batterie (non représentée sur les figures), un circuit intégré pour la gestion de l'alimentation, un contrôleur ethernet pour permettre de connecter le boitier sur un réseau informatique, un contrôleur wifi afin de permettre de connecter le boitier sur un réseau informatique sans fil, et des moyens d'alimentation des balises lumineuses et sonore 15. Le processeur comporte un programme informatique permettant de recevoir les signaux numériques et/ou analogiques transmis par la machine à laquelle le boitier suivant l'invention est connecté, puis d'horodater lesdits signaux et de les enregistrer dans la mémoire du boitier, de calculer des indicateurs de performance et de maintenance tels que le taux de disponibilité, le MTBF, le MTTF, etc. et de générer des fichiers informatiques, au format d'un tableur du type excel®, d'une page web au format html, etc. par exemple, qui peuvent être exportés, par l'intermédiaire d'une liaison sans fil (Wifi), ou filaire (ethernet), et consultés sur un appareil informatique de type PC, PC portable, tablette, smartphone. Par ailleurs, plusieurs boitiers suivant l'invention peuvent être connectés, par une liaison sans fil (Wifi, Zigbee ou similaire), ou filaire (Ethernet ou Internet) à un superviseur informatique pouvant lire le contenu des boitiers et collecter les informations, en différé ou en temps réel. On notera que l'on entend par « tableur » un programme informatique capable de manipuler des feuilles de calcul tel que le logiciel Excel ®.

On observera que, de manière avantageuse, la communication des données entre les balises d'un même réseau wifi et/ou internet est autonome et ne nécessite pas le recours à un serveur informatique central.

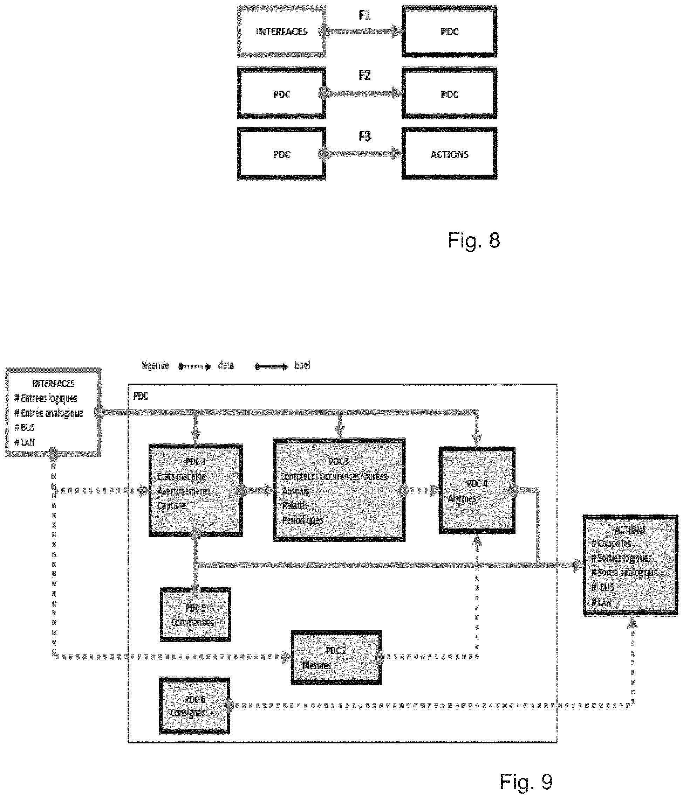

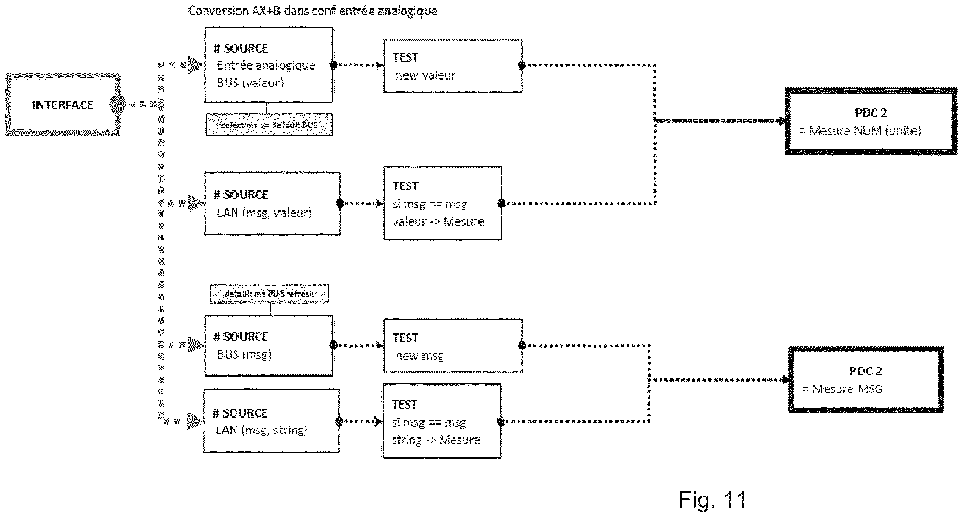

Par ailleurs, en référence aux figures 8 et 9, le processeur comporte un programme d'ordinateur (de configuration) permettant de classer les données transmises par les différentes interfaces connectées à la carte électronique de traitement 2, à savoir les entrées logiques, les entrées analogiques, le BUS et le LAN par exemple, dans différentes arborescences de plans de classement dits PDC, mais également de faire interagir deux plans de classement PDC et de déterminer une ou plusieurs actions en fonction des données de chaque plan de classement PDC. En l'espèce, le programme d'ordinateur classe les données transmises par les différentes interfaces connectées à la carte électronique de traitement 2, à savoir les entrées logiques, les entrées analogiques, le BUS et le LAN, dans un premier plan de classement PDC1 comprenant les données relatives aux états de la machine, aux avertissement et aux captures, un second plan de classement PDC2 comprenant les données relatives aux mesures physiques (figure 11), un troisième plan de classement PDC3 comprenant les données relatives aux compteurs d'occurrences et/ou de durées, qu'ils soient absolus, relatifs ou périodiques, et un quatrième plan de classement comprenant les données relatives aux alarmes.

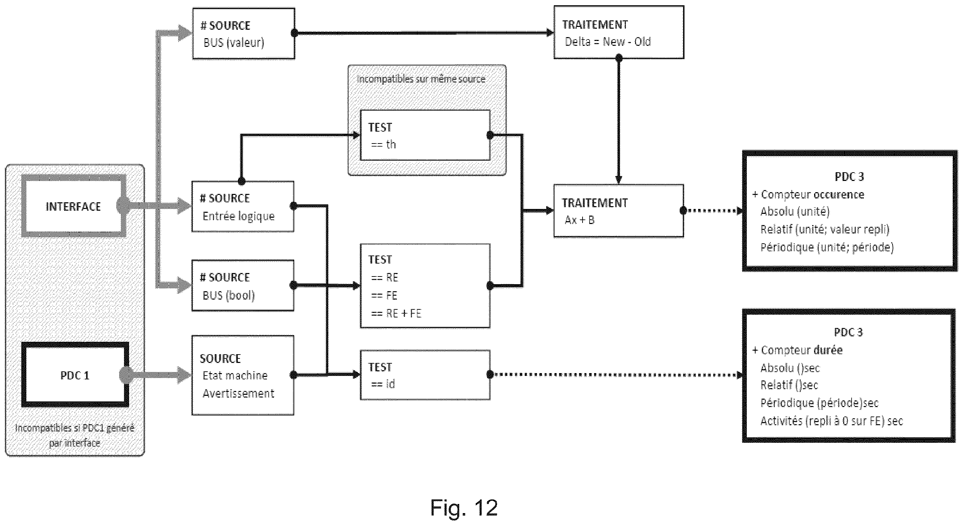

En référence aux figures 9 et 12, certaines données du plan de classement PDC1 comprenant les données relatives aux états de la machine, aux avertissement et aux captures sont ensuite traitées en identifiant dans un premier temps la source des données, puis en faisant passer un test auxdites données et éventuellement une étape de traitement consistant à appliquer une fonction de conversion de l'entrée analogique de type Ax+B ou similaire afin de classer lesdites données dans le plan de classement PDC3 en tant que compteur occurrence, que ce soit en absolu (unité), en relatif (unité, valeur, repli) ou en périodique (unité, période), ou en tant que compteur durée, que ce soit en absolu, en relatif, en périodique (période en sec) ou en activité (repli à 0 en FE en sec).

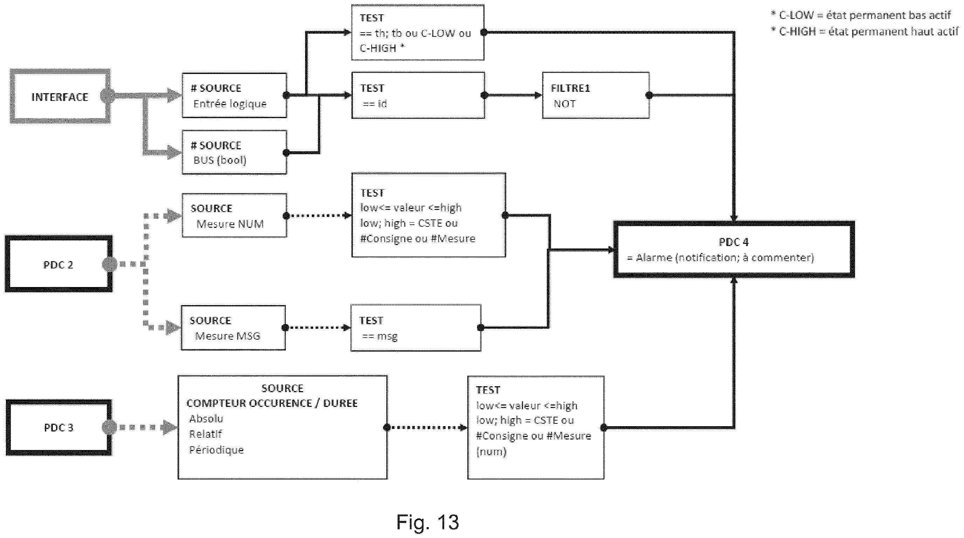

En référence aux figures 9 et 13, certaines données du plan de classement PDC2 comprenant les données relatives aux mesures et du plan de classement PDC3 comprenant les données relatives aux compteurs d'occurrences et/ou de durées sont ensuite traitées en identifiant dans un premier temps la source des données, puis en faisant passer un test auxdites données afin de classer lesdites données dans le plan de classement PDC4 en tant qu'alarmes.

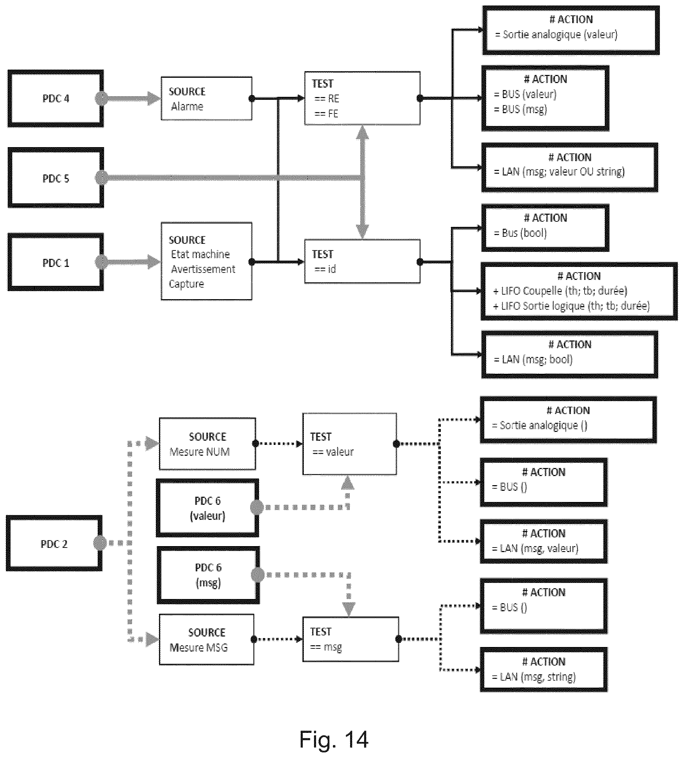

Ensuite, en référence aux figures 9 et 14, le programme d'ordinateur détermine des actions pour les balises lumineuses, sonores ou similaires de la machine, les sorties logiques, la sortie analogique, le BUS et le LAN, en fonction des données des plans de classement PDC1, PDC2, PDC4, PDC5 et PDC6. A cet effet, les actions sont déterminées à partir de la détermination de la source des données des plans de classement PDC1, PDC2, PDC4, PDC5 et PDC6 et d'au moins un test, tel qu'un test sur la valeur, l'identité ou le message par exemple.

D'une manière générale, on comprend bien que le boitier suivant l'invention permet la transmission d'ordres à la machine à laquelle il est connecté au moyen de ses fonctions IHM, selon l'acronyme « Interaction Homme-Machine », ou similaire (via API par exemple), à travers la communication LAN notamment.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système de suivi de production assisté par ordinateur d'un(e) ou plusieurs ateliers ou lignes de production comprenant respectivement une ou plusieurs machines sur la ou lesquelles sont positionnés au moins un boitier d'acquisition comprenant une carte électronique de connectique (4) connectée aux différentes interfaces de la ou des machines, telles que les entrées logiques et/ou les entrées analogiques et/ou le BUS et/ou le LAN de chaque machine et une carte électronique de traitement (2) des données connectée à ladite carte électronique de connectique (4), ***caractérisé* en ce qu'**il comprend un programme d'ordinateur apte à horodater et classer les données transmises par les différentes interfaces connectées à la carte électronique de traitement (2), dans différentes arborescences de plans de classement dits PDC, à classer les données d'un plan de classement PDC vers un second plan de classement PDC et de déterminer une ou plusieurs actions en fonction des données de chaque plan de classement PDC, et à générer des fichiers informatiques, au format d'un tableur, d'une page web au format html, ou similaire, comprenant les données relatives aux différents plans de classement PDC et/ou relatives aux actions, aptes à être exportés, par l'intermédiaire d'une liaison sans fil (Wifi), ou filaire (ethernet), et consultés sur un appareil informatique de type PC, PC portable, tablette, smartphone ou similaire.

2. Système de suivi assisté par ordinateur selon la revendication 1 ***caractérisé* en ce que** ledit programme d'ordinateur comprend des moyens pour classer les données transmises par les différentes interfaces connectées à la carte électronique de traitement (2) dans un premier plan de classement PDC1 comprenant les données relatives aux états de la machine, aux avertissement et aux captures.

3. Système de suivi assisté par ordinateur selon l'une quelconque des revendications 1 ou 2 ***caractérisé* en ce que** ledit programme d'ordinateur comprend des moyens pour classer les données transmises par les différentes interfaces connectées à la carte électronique de traitement (2) dans un second plan de classement PDC2 comprenant les données relatives aux mesures physiques.

4. Système de suivi assisté par ordinateur selon l'une quelconque des revendications 1 à 3 ***caractérisé* en ce que** ledit programme d'ordinateur comprend des moyens pour classer les données transmises par les différentes interfaces connectées à la carte électronique de traitement (2) dans un troisième plan de classement PDC3 comprenant les données relatives aux compteurs d'occurrences et/ou de durées, qu'ils soient absolus, relatifs ou périodiques.

5. Système de suivi assisté par ordinateur selon l'une quelconque des revendications 1 à 4 ***caractérisé* en ce que** ledit programme d'ordinateur comprend des moyens pour classer les données transmises par les différentes interfaces connectées à la carte électronique de traitement (2) dans un quatrième plan de classement comprenant les données relatives aux alarmes.

6. Système de suivi assisté par ordinateur selon l'une quelconque des revendications 1 à 5 ***caractérisé* en ce que** certaines données du plan de classement PDC1 comprenant les données relatives aux états de la machine, aux avertissement et aux captures sont ensuite traitées par le programme d'ordinateur en identifiant dans un premier temps la source des données, puis en faisant passer un test auxdites données et éventuellement une étape de traitement consistant à appliquer une fonction de conversion de l'entrée analogique de type Ax+B ou similaire afin de classer lesdites données dans le plan de classement PDC3 en tant que compteur occurrence, que ce soit en absolu (unité), en relatif (unité, valeur, repli) ou en périodique (unité, période), ou en tant que compteur durée, que ce soit en absolu, en relatif, en périodique (période en sec) ou en activité (repli à 0 en FE en sec).

7. Système de suivi assisté par ordinateur selon l'une quelconque des revendications 1 à 6 ***caractérisé* en ce que** certaines données du plan de classement PDC2 comprenant les données relatives aux mesures et du plan de classement PDC3 comprenant les données relatives aux compteurs d'occurrences et/ou de durées sont ensuite traitées par le programme d'ordinateur en identifiant dans un premier temps la source des données, puis en faisant passer un test auxdites données afin de classer lesdites données dans le plan de classement PDC4 en tant qu'alarmes.

8. Système de suivi assisté par ordinateur selon l'une quelconque des revendications 1 à 7 ***caractérisé* en ce que** ledit programme d'ordinateur comprend des moyens pour déterminer des actions pour les balises lumineuses, sonores ou similaires (15) du boitier et/ou les sorties logiques et/ou la sortie analogique et/ou le BUS et/ou le LAN, en fonction des données des plans de classement PDC1, PDC2, PDC4, PDC5 et PDC6, lesdites actions étant déterminées à partir de la détermination de la source des données des plans de classement PDC1, PDC2, PDC4, PDC5 et PDC6 et d'au moins un test, tel qu'un test sur la valeur, l'identité ou le message ou similaire.

9. Système de suivi assisté par ordinateur selon l'une quelconque des revendications 1 à 8 ***caractérisé* en ce que** le boîtier est constitué d'un capot dit principal (1) ouvert à chacune de ses extrémités et apte à recevoir une carte électronique de traitement (2), un capot inférieur (3) dit socle apte à recevoir une carte électronique de connectique (4) et à coopérer avec l'extrémité inférieure du capot principal (1) et comprenant des moyens de solidarisation d'un tube coudé (7), une embase de fixation (8) apte à être fixée sur une machine et comprenant des moyens de solidarisation du tube coudé (7), ladite carte électronique de traitement (2) étant apte à être connectée à la carte électronique de connectique (4), et un capot supérieur (14) coiffant l'extrémité supérieure du capot principal (1).

10. Système de suivi assisté par ordinateur selon la revendication 9 ***caractérisé* en ce que** le capot inférieur (3) est constitué d'une pièce de révolution comportant à une première extrémité une jupe périphérique comportant des moyens de solidarisation coopérant avec le bord de l'extrémité inférieure du capot principal (1) et à l'extrémité opposé une section tubulaire cylindrique (6) recevant le tube coudé (7).

11. Système de suivi assisté par ordinateur selon l'une quelconque des revendications selon l'une quelconque des revendications 9 ou 10 ***caractérisé* en ce que** l'embase de fixation (8) est constituée d'une platine de fixation (9), sensiblement rectangulaire ou oblongue, comprenant quatre trous traversant (11) pour permettre la fixation de ladite platine (9) sur une paroi verticale ou horizontale d'une machine, au moyen de vis, écrous ou de rivets ou similaires et, dans la partie centrale de ladite platine (9), une portion cylindrique (12) apte à recevoir le tube coudé (7).

12. Système de suivi assisté par ordinateur selon l'une quelconque des revendications 9 à 11 ***caractérisé* en ce qu'**il comporte une ou plusieurs balises lumineuses ou sonore ou similaires (15) amovibles.

13. Système de suivi assisté par ordinateur selon la revendication 12 ***caractérisé* en ce que** chaque balise lumineuse ou sonore ou similaires (15) présente une forme sensiblement cylindrique.

14. Système de suivi assisté par ordinateur selon l'une quelconque des revendications 12 ou 13 ***caractérisé* en ce que** l'extrémité inférieure de chaque balise lumineuse ou sonore (15) comporte une jupe circulaire apte à coiffer l'extrémité supérieure du capot principal (1) ou l'extrémité supérieure d'une autre balise lumineuse ou sonore (15) et l'extrémité supérieure de chaque balise lumineuse (15) est apte à être fermée par le capot supérieur (14).

15. Système de suivi assisté par ordinateur selon l'une quelconque de revendications 12 à 14 ***caractérisé* en ce que** chaque balise lumineuse (15) comporte au moins une LED montée sur un circuit électrique apte à être connecté à la carte électronique de traitement (2) positionnée dans le capot principal (1) et, éventuellement, au circuit électrique d'une autre balise lumineuse ou sonore ou autre (15) coiffant la précédente.
